# EUROPEAN PATENT APPLICATION

(11) **EP 2 278 467 A2**
(43) Date of publication of application: **26.01.2011**
(21) Application number: 10166769.9
(22) Date of filing: 22.06.2010
(51) Int. Cl.: G06F 11/34

(54) **System and method for auditing software usage**

(30) Priority: 22.06.2009 US 219052 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system for auditing the use of software on a computing device comprises a data collection server. In response to a communication link being available between the data collection server and the computing device, the data collection server is configured to: (1) receive from the computing device, via the communication link, data including (a) a software identifier identifying the software, (b) a device identifier identifying the computing device, and (c) an event identifier identifying a usage event performed by the software; (2) access a database storing previously received software identifiers, device identifiers, and event identifiers; and (3) update the database to include the received data. A method for auditing the use of software on a computing device is also disclosed.

## Description

This application claims priority to U.S. Provisional Application 61/219,052, which was filed June 22, 2009, and which is fully incorporated herein by reference.

### BACKGROUND OF THE INVENTION

### Field of the Invention

The field of the present invention is systems and methods for auditing software usage, and more particularly, to auditing different stages of software usage on a user's computing device.

### Description of the Related Art

Currently, there exist a several ways to track software installations, and for most software developers, these techniques for tracking software installations also provide a limited ability to track software usage. These methods include such things as tracking point-of-sale transactions, tracking license purchases and/or activations, and tracking installations, both licensed and unlicensed, through a software authentication program. Each of these methods provides a snapshot in time of software usage, whether its of purchased software at the point-of sale, licensed software at the time of license purchase and/or activation, or use of licensed and/or unlicensed software at the time of authentication. However, because each of these methods only provides a single snapshot in time, as opposed to tracking usage over a period of time, the data collected from these methods is of limited usefulness. A reliable method of tracking software usage and installations over time would therefore provide more data, and thus increase the ability to analyze the data for information that is useful to the software developer.

### SUMMARY OF THE INVENTION

The present invention is directed toward a system and method for auditing software usage on a computing device. Through a communication link being available between the computing device and a data collection server, usage of the software on the computing device is tracked through a series of predetermined usage events performed by the software. By tracking and correlating these usage events with other data relating to the software and the computing device, a more detailed picture of usage of the software is enabled through known data analysis techniques.

In a first separate aspect of the present invention, with respect to the system, in response to the communication link being available between the data collection server and the computing device, the data collection server is configured to: (1) receive from the computing device, via the communication link, data including (a) a software identifier identifying the software, (b) a device identifier identifying the computing device, and (c) an event identifier identifying a usage event performed by the software; (2) access a database storing previously received software identifiers, device identifiers, and event identifiers; and (3) update the database to include the received data.

In a second separate aspect of the present invention, building upon the first separate aspect, to update the database, the data collection server is further configured to: compare the received device identifier and software identifier with the device identifiers and software identifiers, respectively, stored within the database; update records within the database to reflect the received data where at least one of the received device identifier and software identifier is already stored within the database; and add a record to the database to reflect the received data where neither of the received device identifier and software identifier is already stored within the database.

In a third separate aspect of the present invention, building upon the first separate aspect, the data received may include additional information useful in performing the software usage audit and subsequent database analysis. As one option, the software identifier may include at least one of a product identifier, a software signature, a software version number, and a license identifier. As another option, the event identifier may include a time stamp indicating a usage event time. As yet another option, the usage event may include one of an initialization event, an upgrade event, a licensing event, and a restricted feature event. The initialization event may occur upon a first use of the software on the computing device. The upgrade event may occur upon a first use of the software following an upgrade from an older version of the software, and following an upgrade event, the received data may include a software version identifier. The licensing event may occur upon purchase of a license authorizing use of the software on the computing device, and following a licensing event, the received data may include a license identifier. The restricted feature event may occur upon use of a restricted feature within the software, wherein the restricted feature is configured to be accessible only following purchase of a license authorizing use of the software on the computing device.

In a fourth separate aspect of the present invention, with respect to the method, following establishment of the communication link between the data collection server and the computing device, the data collection server receives data from the computing device via the communication link. The data includes: (a) a software identifier identifying the software, (b) a device identifier identifying the computing device computing, and (c) an event identifier identifying a usage event performed by the software. A database storing previously received and associated software identifiers, device identifiers, and event identifiers is then accessed and updated to include the received data.

In a fifth separate aspect of the present invention, building upon the fourth separate aspect, the database is queried to identify device identifiers associated with one or more different types of usage events. As one example, the query may look for device identifiers having database records associated with each of an initialization event, a licensing event, and a restricted feature event. As another example, the query may look for device identifiers having database records associated with each of an initialization event and a restricted feature event, but not a licensing event. As yet another example, query may look for device identifiers having database records associated with each of an initialization event and a substantially contemporaneous licensing event, although any other desirable time frame between an initialization event and a licensing event may be queried.

In a sixth separate aspect of the present invention, any of the foregoing aspects may be employed in combination. Aspects listed for the system may be incorporated into the method, just as aspects listed for the method may be incorporated into the system.

Accordingly, an improved system and method for auditing software usage on a computing device are disclosed. Advantages of the improvements will appear from the drawings and the description of the preferred embodiment.

### BRIEF DESCRIPTION OF THE DRAWINGS

In the drawings, wherein like reference numerals refer to similar components:

FIG. 1 is a block diagram showing a system for auditing software usage on a computing device according to one embodiment of the invention.

FIG. 2 is a block diagram representing memory allocation for a device identifier for use in accordance with the present invention.

FIG. 3 is a flowchart illustrating a software process for collection of audit data according to another embodiment of the present invention.

### DETAILED DESCRIPTION

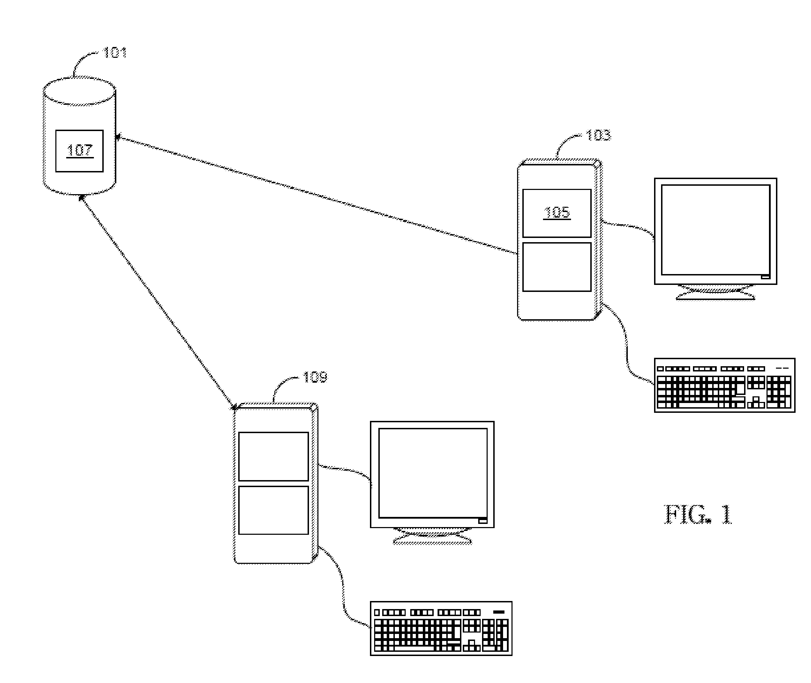

Turning in detail to the drawings, FIG. 1 illustrates a data collection server 101 which receives audit data from the computing device 103 relating to the use of software on the computing device 103. The computing device 103 may be any machine or device capable of communication with a computer network, such as a game console, a personal computer, a server computer, a laptop computer, a tablet computer, a personal digital assistant, a mobile phone, a wireless communication device, an onboard vehicle computer, and the like. The computing device 103 includes executable software 105 for which audit data is collected. In some instances, the software 105 requires a license to be authorized for use. The software 105 includes an audit routine which collects information about usage of the software and the computing device, generates the audit data based on the collected information, establishes the communication link with the data collection server 101, and transmits the audit data. Alternatively, the computing device 103 may include a separate auditing application to perform these functions. However, there is a risk that a separate monitoring application might not be active on the computing device while the software being audited is being used, thereby causing loss of audit data. For this reason, incorporating an auditing routine into the software 105 is preferred.

The audit data is transferred via a communication link established between the computing device 103 to the data collection server 101 and maintained as records within the database 107. As shown, the database 107 resides on the data collection server 101, however, in practice the database may reside on any machine, on any recordable medium, or be resident within any memory space to which the data collection server 101 is communicably connected, either directly or indirectly. An access device 109 communicates with the data collection server 101 through a separate communication link to enable queries of the database 107. While a single computing device is shown, the data collection server is configured to establish communication links with multiple computing devices so that audit data from each computing device can be received and recorded, thus enabling auditing of the software within substantially the entire market for that software.

The communication link may take any form desired. For example, the communication link may be established over a private communications network or over a public communications network, the Internet being an example of the latter. Also, the communication link may be established directly or indirectly, and the link may be permanent or transitory. Most typically, the communication link will be established as needed between the data collection server 101 and the computing device 103 via the Internet or other wide area network (WAN).

Following receipt of the audit data over the communication link, the database 107 is accessed to determine whether either of the device identifier or the software identifier, or any of the components of these identifiers, are currently stored as part of records within the database. The database 107 stores records of previously received audit data, against which the received audit data is compared. If no matching records are found with reference to either of the device identifier, the software identifier, or any of the components thereof in the received audit data, then a new record is entered into the database 107 reflecting the received audit data. If one or more of the device identifier, the software identifier, or any of the components thereof in the received audit data are currently included as part of existing records within the database 107, then the currently existing record, or records, as appropriate, are updated to include the received audit data.

The audit data includes at least a software identifier, a device identifier, and an event identifier. The software identifier includes at least a product identifier and a software signature. The product identifier identifies the title of the software being used on the computing device 103 by title name, product number, product key, or any other appropriate data that indicates the specific software title. The software signature identifies the software being used through creation of a software signature on the computing device. This software signature may then be compared against software signatures on file by the software developer, manufacturer, and/or owner, to identify the software title being used on the computing device. This additional identification of the software title being used serves as a cross check on the product identifier. In the event that the software signature received in the audit data does not match any software signature on file, this may be an indicator that the software being used on the is an unauthorized copy of the software. In such instances, the audit data may still be added to the database 107 so that usage of the unauthorized copy can also be audited, along with any increase of usage of the unauthorized copy among other users.

The software signature may be generated in any number of ways, including through the use of commonly used hash functions, checksum functions, software fingerprint functions, and the like. Such functions, along with methods of implementing such functions to produce software signatures (also sometimes referred to as "fingerprints"), are well known to those of skill in the relevant arts, and as such are not discussed in further detail herein.

The software identifier may also include information identifying the version number of the software being used, a license identifier, and/or a license number. Inclusion of the version number enables tracking of the different software versions currently in use by users of the software. Inclusion of the version number also enables determination when and if a user reverts to a previous version of the software following an update event. The license identifier or license number may be included as part of the software identifier following licensing and/or registration of the software by the user on the computing device.

The event identifier serves to identify usage events that occur during a user's regular use of the software. A usage event, for purposes of this description, is any identifiable activity performed by or with the software on a user's computing device. Such functions may include function calls, system calls, subroutine calls, library calls, usage of any particular feature, license activation and/or registration, or any other activity of the software on the user's computing device. Some activities which may be of particular interest for software usage tracking purposes are:

the first time the software is used following installation on the user's computing device (an "initialization event");

the first time the software is used following a software upgrade from an older version to a newer or current version (an "upgrade event");

when the software is licensed and/or registered (a "licensing event");

when specific restricted features of the software are used, either for the first time or each instance, where the software is configured such that, during normal use, these restricted features are available only once the software is licensed and/or registered (a "restricted feature event").

The first use of the software is typically signified by the software having no other presence or support files already established on the user's computing device. For example, the first time the software is executed on the user's computing device, one or more of user settings files, user preferences files, or any other files associated with the software, whether visible to the user or not, will not preexist on the user's computing device, and the software will generate one or more of these files the first time it is used on that device. Thus, the first time the software is used on the computing device, the routine will look for at least on of the files indicative of prior use, and if the specified file(s) is not found, an initialization event is reported in the audit data.

An upgrade event may be reported by having the routine track the time and date of the last software upgrade, then each time the software is used, the routine will perform a check to determine if a software upgrade was recently performed and whether an upgrade event has been reported. If an upgrade event was previously reported, no action is taken. Otherwise, an upgrade event is reported in the audit data.

The purchase of a software license and/or registration may take place in any manner desired. Like a software upgrade, the license and/or registration state of the software is tracked and reported in the audit data as necessary.

Restricted feature events may be reported each time a restricted feature is used, each time a restricted feature is used for the first time, or based upon any other desired criteria. In the event that restricted feature events are reported based upon the first use of a restricted event, the use of the restricted feature may be tracked by the routine. After the first use of a restricted feature, a record will exist on the computing device that a restricted feature event has already been reported for the restricted feature. Moving forward, when a restricted feature is accessed and no reporting record is found, then a restricted feature event is reported in the audit data. Otherwise, no action is taken.

Each of the activities described above which result in reporting of a usage event may be identified and tracked in any desirable manner according to the preferences of a particular implementation. Further, the reporting of activities need not occur in real time if no communication link can be established with the data collection server. In such instances, the reporting events are preferably queued and time stamped at the time they occur and later reported in the audit data at a time when a communication link can be established.

For further delineation of software usage, the event identifier may include a time stamp to indicate the time that the usage event occurred on the user's computing device. Inclusion of a time stamp enables a comparison of when particular event usages occur with respect to each other on individual computing devices . For example, the amount of time between the initialization event and the licensing event can be tracked. In instances where the software is initially provided as limited use trial software, the time between the initialization event and the licensing event through conversion to the full version can provide important and highly relevant information to the software developer and/or publisher. When the initialization event and the licensing event are substantially concurrent, this could mean that the software and license were purchased simultaneously. Alternatively, when the initialization event and the licensing event are substantially contemporaneous, i.e., occurring on the same day, this could mean that the user made a quick decision about purchasing the license. Further, if the licensing event also substantially contemporaneous with a restricted feature event, and the restricted features are delineated, each with their own separated identifier, then this could be used to imply that the restricted feature used was a strong motivating factor in the user's decision to license the full version of the software.

The event identifier can also provide other important information. For example, when both an initialization event and a restricted feature event have been recorded in the database for a user's computer, but no licensing event has been recorded for that user's computer, then this can be an indication that the software is being used unlicensed and has, in fact, been pirated.

Depending upon the circumstances of usage for the software, the audit data, especially including the software identifier and the event identifier, may also include additional information to track other activity of the software beyond those which are expressly described to herein.

The audit routine, or alternatively a separate auditing application, may include a device identifier routine that collects information regarding computing device by checking a number of parameters which, collectively, are expected to uniquely identify computing device. The description below presumes that the software includes a routine which generates the device identifier. The parameters checked may include, for example, hard disk volume name, user name, device name, user password, hard disk initialization date, etc. The collected information includes information that identifies the hardware on which the software is used, such as, for example, CPU number, or unique parameters associated with the firmware in use. The system information may further include system configuration information, such as amount of memory, type of processor, software or operating system serial number, etc. The parameters checked may also include, alternatively or in addition, virtual machine specifications. Examples of virtual machine specifications include, but are not limited to, information relating to virtual processors, virtual BIOS, virtual memory, virtual graphics, virtual IDE drives, virtual SCSI devices, virtual PCI slots, virtual floppy drives, virtual serial (COM) ports, virtual parallel (LPT) ports, virtual keyboard, virtual mouse and drawing tablets, virtual Ethernet card, virtual networking, virtual sound adapter, etc.

Based on the collected information, the routine generates a device identifier that uniquely identifies the user's computer. The device identifier may be stored in a hidden directory of the device, and/or it may be generated each time a user event occurs, or at any other desired time. The device identifier, by virtue of the software being used on the computing device or otherwise having access to the computing device's hardware and file system, is generated by a process which operates on data indicative of the computing device's configuration and hardware.

The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The software routine that generates the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured device identifier routine operating or otherwise having had access to the same computing device for which the device identifier was first generated. Conversely, each identifier, again to a very high degree of certainty, can be successfully reproduced by the suitably configured device identifier routine operating or otherwise having access to the same computing device on which the identifier was first generated.

The device identifier routine may operate by performing a system scan to determine a present configuration of the computing device. The routine may then select the machine parameters to be used as input for generating the unique device identifier. Selection of parameters may vary depending on the system configuration. Once the parameters are selected, the routine may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

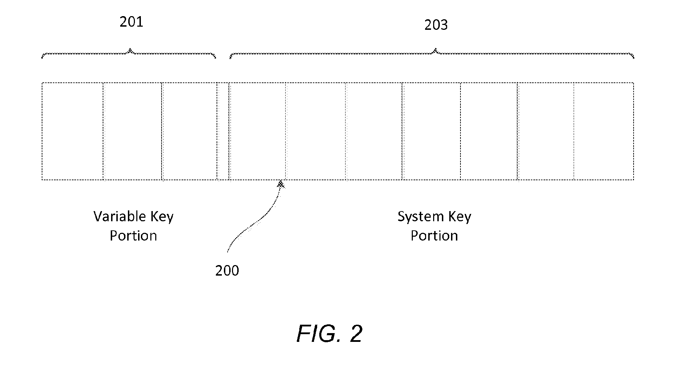

FIG. 2 illustrates an exemplary embodiment of a device identifier 200, which may include two components - namely, a variable key portion 201 and a system key portion 203. The variable key portion 201 may be generated by reference to a variable platform parameter, such as via reference to system time information, although other parameters which are variable may be utilized in other embodiments. The system key portion 203 may include the above described parameters expected to be unique to the computing device on which the software is used, such as, for example, hard disk volume name, user name, computer name, user password, hard disk initialization date, or combinations of the parameters described above. The variable key portion 201 and/or the system key portion 203 may be combined with the IP address and/or other platform parameters of the computing device. The device identifier, or portions thereof, may be encrypted to add an additional layer of specificity and security.

The software may actively monitor itself to determine when a reportable usage event has occurred, much as a separate auditing application would, and activate the audit routine upon occurrence of each usage event. If the software is configured thusly, it preferably sets a usage event flag, which indicates the type of event and the time of occurrence, to facilitate the monitoring process. Thereafter, the audit routine, or the separate auditing application, can detect and respond appropriately to flag and the data included therewith. Alternatively, the software may be coded to activate the audit routine upon occurrence of a reportable usage event, passing data related to the usage event to the audit routine.

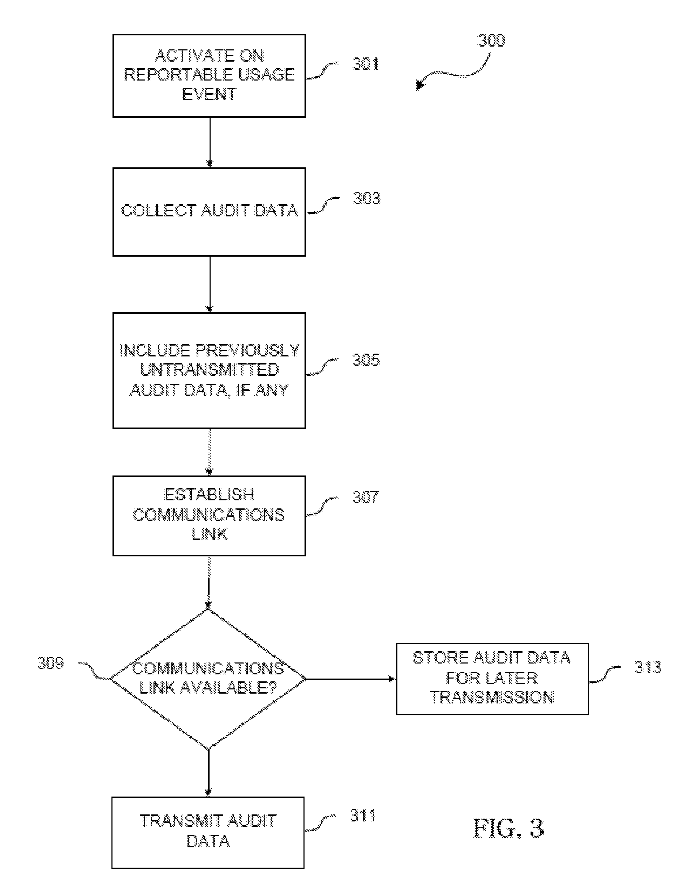

FIG. 3 illustrates the process 300 of the audit routine once it has been activated 301, regardless of the manner in which it is activated. Once activated, the audit routine collects 303 all appropriate information, including at least the usage event, the software identifier, and the device identifier, to assemble the desired audit data. Next, the audit routine checks for any audit data that may have been previously collected but was not transmitted for failure to establish a communication link. This untransmitted audit data is added 305 to the most recently collected audit data as preparation for transmission. Most notably, the two sets of audit data may be sent as a single unit, with appropriate parsing of the data occurring at the data collection server. Once the audit data is prepared for transmission, the routine attempts to establish 307 a communication link with the data collection server. If the communication link is available 309, then the audit data is transmitted to the data collection server 311. Otherwise, the audit data is stored on the computing device for later transmission 313. As an alternative, instead of waiting until new audit data has been collected to attempt to resend previously stored audit data, the audit routine may continue making attempts to establish a communication link and resend the audit data at any interval desired, whether regular or irregular. As a further alternative, a combination of these two techniques may be employed, where a limited number of initial attempts are performed to establish the communications link, and failure to establish the communications link after exhaustion of those attempts results in the audit data being stored for later transmission.

Thus, a system and a method for auditing software usage on a computing device are disclosed. While embodiments of this invention have been shown and described, it will be apparent to those skilled in the art that many more modifications are possible without departing from the inventive concepts herein. The invention, therefore, is not to be restricted except in the spirit of the following claims.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system for auditing the use of software on a computing device, the system comprising:
a data collection server which, in response to a communication link being available between the data collection server and the computing device, is configured to:
receive from the computing device, via the communication link, data including (a) a software identifier identifying the software, (b) a device identifier identifying the computing device, and (c) an event identifier identifying a usage event performed by the software;
access a database storing previously received software identifiers, device identifiers, and event identifiers; and
update the database to include the received data.

2. The system of claim 1, wherein the software identifier comprises at least one of a product identifier, a software signature, a software version number, and a license identifier.

3. The system of claim 1, wherein the event identifier includes a time stamp indicating a usage event time.

4. The system of claim 1, wherein the usage event comprises one of an initialization event, an upgrade event, a licensing event, and a restricted feature event.

5. The system of claim 4, wherein following the upgrade event, the data further includes a software version identifier.

6. The system of claim 4, wherein following the licensing event, the data further includes a license identifier.

7. The system of claim 1, wherein, to update the database, the data collection server is further configured to:
compare the received device identifier and software identifier with the device identifiers and software identifiers, respectively, stored within the database;
update records within the database to reflect the received data where at least one of the received device identifier and software identifier is already stored within the database; and
add a record to the database to reflect the received data where neither of the received device identifier and software identifier is already stored within the database.

8. A method for auditing the use of software on a computing device, the method comprising:
establishing a communication link between a data collection server and the computing device;
receiving at the data collection server from the computing device, via the communication link, data including (a) a software identifier identifying the software, (b) a device identifier identifying the computing device, and (c) an event identifier identifying a usage event performed by the software;
accessing a database storing previously received and associated software identifiers, device identifiers, and event identifiers; and
updating the database to include the received data.

9. The method of claim 8, wherein the software identifier comprises at least one of a product identifier, a software signature, a software version number, and a license identifier.

10. The method of claim 8, wherein the event identifier includes a time stamp indicating a usage event time.

11. The method of claim 8, wherein the usage event comprises one of an initialization event, an upgrade event, a licensing event, and a restricted feature event.

12. The method of claim 11, wherein following the upgrade event, the data further includes a software version identifier.

13. The method of claim 11, wherein following the licensing event, the data further includes a license identifier.

14. The method of claim 8, further comprising querying the database to identify device identifiers associated with each of an initialization event, a licensing event, and a restricted feature event.

15. The method of claim 8, further comprising querying the database to identify device identifiers associated with each of an initialization event and a restricted feature event, but not a licensing event.
